(19) Europäisches Patentamt

European Patent Office

Office européen des brevets

(11) **EP 1 040 145 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(21) Anmeldenummer: **98965847.1**

(22) Anmeldetag: **17.12.1998**

(51) Int Cl.$^7$: **C08F 289/00**, C08H 5/02, C12P 7/22, C08F 251/02

(86) Internationale Anmeldenummer:
**PCT/EP1998/008279**

(87) Internationale Veröffentlichungsnummer:
**WO 1999/031155 (24.06.1999 Gazette 1999/25)**

(54) **VERFAHREN ZUR PFROPFUNG VON LIGNIN**

METHOD FOR GRAFTING LIGNIN

PROCEDE DE GREFFAGE DE LIGNINE

(84) Benannte Vertragsstaaten:
**DE FI FR GB SE**

(30) Priorität: **17.12.1997 DE 19756172**

(43) Veröffentlichungstag der Anmeldung:
**04.10.2000 Patentblatt 2000/40**

(60) Teilanmeldung:
**03025740.6**
**03029263.5**
**03028952.4**

(73) Patentinhaber: **STOCKHAUSEN GmbH & Co. KG**
**47805 Krefeld (DE)**

(72) Erfinder:
• **HÜTTERMANN, Aloys**
**D-37075 Göttingen (DE)**
• **MAI, Carsten**
**D-37075 Göttingen (DE)**

(74) Vertreter: **Harders, Gerhard, Dr.**
**Stettiner Strasse 2**
**61184 Karben (DE)**

(56) Entgegenhaltungen:
**EP-A- 0 072 445** **EP-A- 0 442 508**
**WO-A-94/12620** **WO-A-95/01426**
**WO-A-95/08588** **US-A- 4 891 415**
**US-A- 5 116 904**

**Beschreibung**

Die vorliegende Erfindung betrifft ein durch Enzyme katalysiertes Verfahren zur Herstellung von Ligninpfropfpolymeren in Lösung, bei dem die Polymerisatausbeute unter der Einwirkung von organischen Peroxidverbindungen hoch ist. Die Bildung von unerwünschten, nicht gepfropften Nebenbestandteilen ist weitgehend zurückgedrängt. Weiterhin umfaßt die Erfindung nach dem o.g. Verfahren hergestellte Lignin-Pfropfpolymerisate mit verbesserter biologischer Abbaubarkeit, Sie findenVerwendung als Baustein in Kondensationsharzen, als Binde- und Agglomeriermittel, als wäßrige und organische Flüssigkeiten absorbierende Polymere, als Flockungshilfsmittel, als Verdickungsmittel, als Hilfsmittel bei der Erdölbohrung (Bohrspülflüssigkeiten) und Förderung, als Suspendier- und Dispergierhilfsmittel sowie als Hilfsmittel bei der Textil- und Faserveredlung.

Lignin ist ein hochmolekularer Stoff, der in verholzenden Pflanzen vorkommt und bei der Gewinnung von Cellulose als Nebenbestandteil anfällt. Je nach der Holzart ist die molekulare Struktur des Lignins unterschiedlich gestaltet, d.h die Phenylpropanstruktur variiert in der Anzahl der Methoxy- und Hydroxy-Gruppen. Nur ein geringer Anteil des Lignins ist wasserlöslich, der weitaus größere, wasserunlösliche Teil kann mit Lösungsmitteln, wie beispielsweise Aceton oder Dioxan extrahiert werden. Die technische Herstellung läuft in der Hauptsache über den Alkali- bzw. den Sulfit-Aufschluß von Holz, bei dem die wasserlöslichen Alkali- oder Ligninsulfonate anfallen sowie über den Organosolv-Prozeß, bei dem das Lignin mittels eines Lösemittel/Wasser-Gemisches aus dem Holz extrahiert wird. Die Molekulargewichte des Lignins liegen im Bereich von 1000 bis 150 000

Da die Hauptmenge des Lignins nach wie vor in den Zellstoff-Fabriken zur Energiegewinnung verbrannt wird, hat es in der Vergangenheit viele Versuche zur Modifizierung gegeben, um diesen nachwachsenden Rohstoff einer breiteren technischen Anwendung zuzuführen Von besonderem Interesse waren dabei die Verfahren, bei denen eine Kombination mit synthetischen Polymerisaten in Form der Pfropfpolymeren realisiert wurde.

So beschreibt die US 4 687 828 hochmolekulare Ligninpfropfpolymere, die in polaten, aprotischen Lösemitteln unter Verwendung der Monomere Acrylamid und Acrylamidomethylpropansulfonsäure in einer Stickstoff-Atmosphare hergestellt werden Als Initiatorsystem wird eine Kombination aus Calciumchlorid, Schwefelsäure, Cer(IV)-Salz und Autooxidationsprodukten des Dioxans (Hydroperoxide) eingesetzt. Nach einer Reaktionszeit von 2 Tagen bei 30°C wird das Polymerisat in einem Nichtlösemittel ausgefällt und abgetrennt Polymerisate mit einer erhöhten Reinheit und besserer Löslichkeit erhält man durch Wiederauflösen in Wasser, mehrtägiges Dialysieren und Gefriertrocknen. Angaben uber den Pfropfgrad werden nicht gemacht, jedoch ergibt sich aus den Beispielen, daß nur etwa 40 Gew.% der eingesetzten Menge an Lignin wiedergefunden wird, der Verlust an Monomer bewegt sich im Rahmen des Ausbeuteverlustes von ca. 80%. Andere Monomertypen werden nach diesem Verfahren nicht angewandt. Die Pfropfpolymerisate werden zur Verwendung als Verdicker, Flutpolymere und Bohrspüladditive vorgeschlagen.

J J Meister et al berichten über die Synthese und Charakterisierung von radikalisch polymerisierten Lignin/ Acrylamid-Pfropfpolymeren [Journal of Polymer Science: Polymer Chemistry Edition, Vol. 22, 1963-1980 (1984)]. Die gemäß der Verfahrensweise der US 4 687 828 hergestellten Pfropfpolymerisate enthielten zwischen 19 und 49 Gew. % an ungepfropftem Homopolymer.

Der EP 442 508 A 1 ist ein Verfahren zu Herstellung von Pfropfpolymerisaten aus Lignin oder Lignin enthaltenden Holzpülpen und ungesättigten Acrylat- bzw. Methacrylat-Monomeren zu entnehmen, das die Pfropfreaktion in einem Lösemittel unter Ausschluß von Sauerstoff in Gegenwart von Halogensalz und einem Hydrogenperoxid-Initiator durchführt. Durch die Pfropfung sollen von mit Kunststoffen kompatible Füllstoffe/Verstärkungsstoffe erhalten werden. Zur Abtrennung von Nebenbestandteilen wird die Mischung aus gepfropften und ungepfropften Bestandteilen dialysiert, die Produkt-Ausbeuten schwanken erheblich. Angaben zum Pfropfgrad bzw. zur Pfropfausbeute werden nicht gemacht, da die Substanzen nicht aufgetrennt werden. Nicht-Lignin-Bestandteile bleiben in jedem Fall ungepfropft.

Die WO 94/01488 lehrt ein Verfahren zur enzymatischen Polymerisation/Modifikation von Lignin oder Lignin enthaltenden Materialien in Wasser mit Peroxidase und Wasserstoffperoxid bei alkalischen pH-Werten, ohne daß organische Lösemittel verwendet werden. Die so modifizierten Lignine haben ein höheres Molekulargewicht und werden als Bindemittel für Holzspanplatten eingesetzt. Die Polymerisation in Gegenwart von synthetischen Monomeren wird nicht beschrieben.

Eine gegenüber dem Stand der Technik wesentlich verbesserte Methode der Ligninpfropfung wird in der WO 95/08588 beschrieben. Unter Verwendung von radikalisch oxidierenden Enzymen lassen sich danach in Wasser, organischen Lösemitteln oder Wasser/Lösemittel-Gemischen alle organischen Verbindungen auf Lignin pfropfen, die mindestens drei Kohlenstoffatome und eine Sauerstoff-, Stickstoff- und oder Mehrfachbindungsfunktion enthalten. Dadurch wird es erstmals ermöglicht, Pfropfpolymere aus Lignin, ungesättigten Monomeren und anderen organischen Verbindungen darzustellen. Die Reaktionszeiten sind gegenüber den anderen Pfropfmethoden kürzer und eine Inertgasatmosphäre ist nicht erforderlich. Als Substrate werden Wasserstoffperoxid für Peroxidasen und Sauerstoff für Phenoloxidasen zugeführt. Die Polymerisatausbeute ist gering und beträgt gemäß Beispiel 4 nur 26% Auch die Pfropfausbeute ist bei diesem enzymatischen Polymerisationsverfahren niedrig Aus dem Stand der Technik ist kein Verfahren zur enzymatischen Ligninpfropfung bekannt, das die Vorteile dieser Methode mit einer erhöhten Polymerisat- bzw. Pfropfausbeute verbindet.

Es bestand daher die Aufgabe, ein Verfahren zur enzymatischen Pfropfung von von Lignin, Lignin enthaltenden Substanzen und Ligninsulfonaten zu finden, bei dem gegenüber dem Stand der Technik, insbesondere gegenüber der DE 43 31 878 A1, eine erhöhte Pfropfausbeute oder zumindest eine erhöhte Polymerisatausbeute ermöglicht wird und die Pfropfreaktion in, fur technische Prozesse akzeptablen Reaktionszeiten auszuführen ist. Eine weitere Aufgabe der Erfindung bestand darin, Pfropfprodukte aus Lignin, Lignin enthaltenden Substanzen und Ligninsulfonaten mit hydrophilen neutralen, anionischen, kationischen ungesättigten Monomeren und / oder anderen organischen Verbindungen bereitzustellen, die eine Verwendung in Wasser oder wäßrigen Flüssigkeiten ermöglichen und die einem biologischen Abbau zugänglich sind. Die Verwendung ist nicht Schutzgegenstand dieser Anmeldung.

Die Aufgabe wird überraschenderweise dadurch gelöst, daß man die durch oxidierende Enzyme katalysierte Pfropfpolymerisation auf Lignin in Gegenwart von organischen Peroxiden/Hydroperoxiden durchführt Dabei kommt es erstaunlicherweise weder zu einer Schädigung der Enzyme durch die organischen Peroxide noch zu einer Erhöhung des Homopolymeranteils, wie es beim Zusatz von peroxidischen Initiatoren zu erwarten ist Es ist gegenüber der Verwendung von Wasserstoffperoxid bzw. Sauerstoff eine deutliche Steigerung der Polymerisationsausbeute zu verzeichnen und es steigt der Anteil des gepfropften Monomers im Pfropfpolymer. Offenbar ist es überraschenderweise möglich, durch die Verwendung der Kombination aus organischen Peroxiden und oxidierenden Enzymen die Reduktion des Peroxids in weit geringerem Maße ablaufen zu lassen als erwartet.

Die Ausbeute an Pfropfpolymerisat nach dem erfinderischen Verfahren ist hoch und liegt vorzugsweise über 50 Gew.%, besonders bevorzugt über 60 Gew.% und ganz besonders bevorzugt über 75 Gew.%.

Die erfindungsgemäßen Pfropfpolymerisate weisen eine unerwartete biologische Abbaubarkeit auf, die sich in einem Abbau des Molekulargewichtes nach Einwirkung von Weißfäule hervorrufenden Basidomyceten zeigt. Nach einer Inkubationszeit von 48 Tagen werden durch biologischen Abbau die Molekulargewichte um mindestens 50 % reduziert

Der Einsatz von organischen Peroxiden bei der enzymatischen Pfropfung hat sich für die Erhöhung der Pfropfausbeute als entscheidend herausgestellt. Ihre Löslichkeit in dem zur Pfropfung eingesetzten Lösemittel bzw Lösemittelgemisch vorausgesetzt, werden die organischen Peroxide bezogen auf die eingesetzten Monomeren in Mengen von 0,01 Gew % bis 10 Gew.%, bevorzugt von 0,1 Gew.% bis 5 Gew % und besonders bevorzugt von 0,25 Gew % bis 1,5 Gew.% verwendet. Beispielhaft zu nennende organische aliphatische, cycloaliphatische und aromatische Peroxide sind t-Butylhydroperoxid, Mono- und Dihydroxyperoxide des Dioxans, Acetylcyclohexansulfonylperoxid, Diacetylperoxidicarbonat.

Dicyclohexylperoxidcarbonat, Di-2-ethylhexylperoxidicarbonat, tert -Butylperneodecanoat, tert -Butylperpivalat, Dioctanoylperoxid, Dilauroylperoxid, Dibenzoylperoxid, tert.-Butylper-2-ethyl-hexanoat, tert.-Butylpermaleinat, Bis-(ter.-butylperoxid)-cyclohexan, tert.-Butylperoxiisopropylcarbonat, tert.-Butylperacetat, 2,2'-Bis-(tert.-butylperoxi)-butan, Dicumylperoxid, Di-tert.-butylperoxid, Di-tert.-amylperoxid, Pinanhydroperoxid, p-Methanhydroperoxid, Cumolhydroperoxid, Peroxyphthalat. Besonders bevorzugt sind t-Butylhydroperoxid, und Mono- und Dihydroxyperoxide des Dioxans

Der Einsatz von Redox-Coinitiatoren kann die Polymerisat- und Pfropfausbeute positiv beeinflussen Beispielhaft seien die Schwermetallsalze von Kupfer, Cobalt, Eisen, Mangan, Nickel und Chrom erwähnt, wobei sich $Fe^{2+}$ und $Mn^{2+}$ besonders bewährt haben. Reduzierende Komponenten wie beispielsweise Ascorbinsäure, Natriumsulfit, Natriumbisulfit, Natriumformaldehydsulfoxylat führen zu einer deutlichen Reduzierung der Polymerisationsaktivität. Die Mitverwendung von Redox-Coinitiatoren gestattet es, die Polymerisation bei tieferer Temperatur durchzuführen. Die üblicherweise verwendeten Mengen an Redox-Coinitiatoren betragen etwa 0,01 bis 5 % bei reduzierend wirkenden Verbindungen und 0,1 bis 100 ppm, vorzugsweise 0,5 - 10 ppm bei Schwermetallen.

Die erfindungsgemäß einzusetzenden, ligninmodifizierenden Enzyme bestehen aus Oxidasen, wie beispielsweise Laccasen, Lignin-Peroxidasen, Mn-Peroxidasen bzw. deren Mischungen. Vorzugsweise werden Laccasen verwendet. Die Einsatzkonzentration der Enzyme kann in weiten Grenzen schwanken und richtet sich u.a. nach dem Enzym-Typ und dem verwendeten Initiatorsystem sowie der Anzahl der zu erzeugenden Phenoxyradikale. bezogen auf die eingesetzten Monomere ergeben sich Richtkonzentrationen von 200 bis 0,1 U pro g Monomer, vorzugsweise von 100 bis 1 U pro g Monomer und besonders bevorzugt von 25 bis 1 U pro g Monomer. Als Enzymeinheit U ist diejenige Enzymmenge definiert, die pro Minute 1 mMol Substrat umsetzt.

Zur Verbesserung der Löslichkeit der Enzyme in organischen Lösemitteln können diese in Enzym-Matrix-Komplexe eingebunden werden. Derartige Enzym-Matrix-Komplexe, und ihre Herstellung werden in der EP 354 485 beschrieben.

Als Pfropfbasis werden erfindungsgemäß Lignin, Ligninderivate, Lignin enthaltende Materialien verwendet, insbesondere die Lignine und Ligninsulfonate verschiedenen pflanzlichen Ursprungs und Molekulargewichts. Ullmann's Encyclopedia of Industrial Chemistry (5. Ed., 1990, Vol. 15) enthält eine Übersicht zu Ligninen, die auch im Rahmen des erfindungsgemäßen Pfropfverfahrens eingesetzt werden können. Aufgrund der Sulfonatgruppen zeigen die Pfropfpolymere auf Basis von Ligninsulfonaten eine verbesserte Löslichkeit in Wasser gegenüber Produkten auf der Grundlage sulfonatfreier Lignine. Je nach dem für die Pfropfpolymere vorgesehenen Anwendungszweck, das Spektrum reicht von niedermolekularen Kritallisationsinhibitoren für Hartwasserbestandteile bis zu hochmolekularen Flokkungs- und Verdickungsmitteln sowie bis zu vernetzten Superabsorbern, werden Lignine unterschiedlichen Molekulargewichts zur Pfropfung eingesetzt.

Der Anteil der Ligninkomponente in der Monomermischung kann in weiten Grenzen schwanken, sollte aber 50 % nicht überschreiten, da dies zu geringeren Ausbeuten und Molekulargewichten führt. Zur Erzielung hoher Molekuargewichte von über 200 000 ist es oftmals vorteilhaft, die Menge an Lignin nicht über 25 Gew.%, vorzugsweise nicht uber 15 Gew % und besonders bevorzugt nicht über 10 Gew.% steigen zu lassen.

Eine Erhöhung des Ligninanteils im Reaktionsgemisch führt auch zu einem erhöhten Einbau des Lignins in das Pfropfpolymer. Anhand von UV-vis-Spektren des GPC-Eluates von Pfropfpolymeren konnte gezeigt werden, daß es sich nicht um eine Mischunge aus Pfropf- und Ligninhomopolymer handelt, sondern daß eine Pfropfung über alle Ligninanteile erfolgt.

In Fällen von ungenügender Löslichkeit der Ligninkomponente im Reaktionsmedium ist es möglich, durch den Zusatz von Tensiden, das betreffende Ligninderivat doch noch der Pfropfreaktion zugänglich zu machen. Die Auswahl des oder der Tenside richtet sich einerseits nach der Struktur der Ligninkomponente und andererseits nach der Zusammensetzung des Reaktionsmediums und erfolgt nach dem Fachmann geläufigen Methoden.

Aufgrund des erfindungsgemäßen enzymatischen Pfropfverfahrens lassen sich eine Vielzahl von ungesättigten organischen Verbindungen zur Pfropfung auf die Ligninkomponenten heranziehen. Als ungesättigte Verbindungen können für die enzymatische Pfropfung beispielsweise die folgenden, unter a) bis d) genannten anionischen, kationischen und neutralen wasserlöslichen Monomerbausteine bzw. deren Mischungen verwendet werden. Die enzymatische Pfropfung erlaubt auch die Copolymerisation mit den unter e) genannten hydrophoben Monomerbausteinen. Aus der Vielfalt der erfindungsgemäß einsetzbaren Monomeren ergibt sich ein breites Anwendungsspektrum, da sowohl kationische, anionische als auch amphotere Pfropfpolymerisate herstellbar sind.

a) Wasserlösliche, säuregruppentragende, ethylenisch ungesättigte Monocarbonsäuren, deren Anhydride und deren Salze; Sulfonsäuren sowie ungesättigte Dicarbonsäuren, deren Anhydride sowie deren Halbester bzw. Halbamide. Beispielhaft seien genannt (Meth)acrylsäure, (Meth)allylsulfonsäure, Vinylessigsäure, 2-Acrylamido-2-methylpropansulfonsäure, Vinylsulfonsäure, Styrolsulfonsäure, Vinylphosphonsäure, Maleinsäure, Fumarsäure, Itaconsäure sowie die Halbester und Halbamide der zuvor genannten Dicarbonsauren, wobei die Halbester und Halbamide durch Reaktion der entsprechenden Säureanhydride mit Alkoholen, Aminen und Aminoalkoholen zugänglich sind Bevorzugte Säuregruppen tragende Monomere sind Acrylsäure, Methacrylsäure, Maleinsäure und Maleinsäureanhydrid, Acrylamido-2-methylpropansulfonsäure und (Meth)allylsulfonsäure bzw deren Salze.

b) Zu den ungesättigten Verbindungen der Gruppe b) gehören nichtionische wasserlösliche Monomere, beispielsweise (Meth)acrylamid, (Meth)acrylnitril, Hydroxyethyl(meth)acrylat, N-Vinylpyrrolidon, N-Vinylimidazol, N-Vinylacetamid, N-Vinylformamid, N-Vinyl-N-Methylacetamid, N-Methylol(meth)acrylamid sowie alkoxylierte Monomere, zu denen man entweder durch Alkoxylierung von ethylenisch ungesättigten, mindestens eine Hydroxy- oder Aminogruppe tragenden Verbindungen oder aber durch die Umsetzung der Alkoxyaddukte von gesättigten aliphatischen, cycloaliphatischen, aromatischen Alkoholen, Aminen oder Thiolen mit ethylenisch ungesättigten Carbonsäuren, reaktiven Carbonsäurederivaten oder Allylhalogeniden gelangt. Beispielhaft seien genannt die Ethylen- und /oder Propylenoxidaddukte von (Meth)allylalkohol, (Meth)allylamin, wie auch Hydroxyethyl(meth)carylat, gegebenenfalls weitere umgesetzt mit reaktiven gesättigten Säurederivaten. Weiterhin seien genannt die Reaktionsprodukte von vorzugsweise einseitig endverschlossenem Ethylenglykol, Isopropylglykol, Butylglykol sowie Nonylphenol, Isotridecanol mit Ethylen- oder Propylenoxid und Weiterreaktion der Alkylenoxidaddukte mit (Meth)acrylsäure, Allylchlorid oder anderen reaktiven, ungesättigten Säurederivaten wie zum Beispiel den Säureanhydriden, den Säurehalogeniden oder den Säureestern Unter diesen Addukten werden bevorzugt Methoxypolyethylenglykol-(meth)acrylate, Nonylphenolpolyglykol(meth)acrylate und Allylalkohole mit jeweils 5 bis 30 Ethylenoxideinheiten.

c) Als Bausteine der Gruppe c) finden Monomere Verwendung, die dem Pfropfpolymer eine kationische Ladung verleihen können oder in Kombination mit anionischen Monomeren amphotere Polymerisate bilden. Beispielhaft sind N,N-Dimethylaminopropyl(meth)acrylamid, N,N-Dimethylaminopropyl(meth)acrylamid, N,N-Dimethylaminoethyl(meth)acrylat, N,N-Dimethylaminopropyl(meth)acrylat zu erwähnen, wobei der Aminstickstoff gegebenenfalls quaterniert oder neutralisiert ist. Bevorzugte Verwendung finden N,N-Dimethylaminoethylacrylat und N,N-Dimethylaminopropylacrylamid.

d) Zur Herstellung von wasserquellbaren, aber nicht mehr wasserlöslichen oder von höhermolekularen, verzweigten, aber noch teilweise löslichen Pfropfpolymeren kann der Einsatz von vernetzend wirkenden Monomeren in begrenzter Menge erforderlich sein. Diese vernetzend wirkenden Substanzen werden entweder während der Polymerisation einpolymerisiert oder aber anschließend zur Vernetzung der bereits bestehenden Polymermoleküle eingesetzt

Als Vernetzer können alle Verbindungen verwendet werden, die mindestens zwei ethylenisch ungesättigte Doppelbindungen oder eine ethylenisch ungesättigte Doppelbindung und eine gegenüber Säuregruppen reaktive funktionelle Gruppe oder mehrere gegenüber Säuregruppen reaktive funktionelle Gruppe enthalten. Beispiele hierfür sind Methylenbisacrylamid, Acrylate und Methacrylate von Polyolen wie Butandiol-diacrylat, Hexandiol-dimethacrylat, Polyethylenglycol-diacrylat und Trimethylolpropantriacrylat und/oder die Acrylate und Methacrylate der oxalkylierten genannten Polyole, wie oxalkyliertes Trimethylolpropantriacrylat. Weiterhin Di- und Polyester von Polyolen und oxethylierten Polyolen mit ungesättigten Monocarbonsäuren und/oder Polycarbonsäuren, wie (Meth) acrylsäureestern von 1,2-Propylenglycolpentaerythrit, Glycerin und Polyglycerin sowie Monoester ungesättigter Alkohole und ethoxylierter ungesättigter Alkohole mit ungesättigten Monocarbonsäuren und/oder Monocarbonsäuren wie (Meth)allylacrylat und -methacrylat, Mono(meth)allylmaleinat, (Meth)allylpolyethylenglycoletheracrylat und -methacrylat, (Meth)allylitaconat, (Meth)allylpolyethylenglycolether-itaconat und Mono(meth)allylpolyethylenglycolether-maleinat. Weiterhin Diallylacrylamid, Diallyphthalat, Diallyladipat, Triallylcitrat und Trimonoallylpolyethylenglycolethercitrat. Weiterhin Allylether von Di-und Polyolen und deren Oxethylate, wie die Diallylether von Ethylenglycol, Diethylenglycol, Polyethylenglycol, die Triallylether von Glycerin, oxethyliertem Glycerin, Trimethylolpropan und oxethyliertem Trimethylolpropan, die Tetraallylether von Pentaerythrit und oxethyliertem Pentaerythrit sowie Tetraallyloxiethan sowie Polyglycidylether, wie z. B. Ethylenglycoldiglycidether und Glyceringlycidylether. Weiterhin Amine und/oder deren Salze und Amide mit mindestens zwei ethylenisch ungesättigten Alkylgruppen, wie Di- und Triallylamin und Tetraallylamoniumchlorid.

e) Als Monomere der Gruppe e) sind alle mit a), b), c) und d) copolymerisierbaren Monomere einsetzbar. Sie werden zur weiteren Modifizierung der Pfropfpolymere eingesetzt und ermöglichen dadurch eine optimale Anpassung an die erfindungsgemäß zu verwendenden Pfropfpolymere. Demzufolge können die Monomere nach d) sowohl einen hydrophilen als auch einen hydrophoben Charakter haben. Beispielhaft seien, Vinylacetat, Vinylpropionat, (Meth)acrylsäureester, Versaticsäurevinylester, Styrol genannt.

Vielfach lassen sich die Gebrauchseigenschaften bereits vorvernetzter Pfropfpolymerisate durch eine Nachvernetzung deutlich verbessern. Diese Nachvernetzung kann prinzipiell bei allen Feuchtigkeitsgehalten des vorvernetzten Polymergels durchgeführt werden. In einer bevorzugten Ausführungsform erfolgt die Trocknung des Polymergels bis zu einem Wassergehalt von 5 - 20 Gew.%, vorzugsweise von höchstens 10 Gew.% bei Temperaturen im Bereich von 100 - 190 °C. Anschließend wird das Trockengut auf eine Korngröße im Bereich von 20 - 3000 µm vorzugsweise 150 - 850 µm zu Polymerisatpulver gemahlen. Die Nachvernetzung des Polymerisats erfolgt auf der Oberfläche der Polymerpartikel mit mindestens einem, zwei- oder mehrfach funktionellen, mit Säuregruppen, vorzugsweise Carboxylgruppen, reagierenden Vernetzungsmittel, das vorzugsweise in Form einer wasserhaltigen Lösung aufgebracht wird Als Nachvernetzungsmittel sind Polyole wie beispielsweise Ethylenglycol, 1,2-Propylenglycol, 1,4-Butandiol, Glycerin, Di- und Polyglycerin, Pentaerythrit, die Oxethylate dieser Polyole sowie deren Ester mit Carbonsäuren oder der Kohlensäure geeignet. Der Zusatz einer Veresterungskatalysators, z. B p-Toluolsulfonsäure oder Phosphorsäure ist vorteilhaft. Weitere geeignete Vernetzungsmittel sind Di- und Polyglycidylether von Polyolen und Polyethylenglycolen und Salze von mehrwertigen Kationen Die Nachvernetzer werden in Mengen von 0.01 bis 20 Gew %, vorzugsweise 0,1 bis 10 und besonders bevorzugt 0,1 bis 3 Gew.% bezogen auf das Polymerisat eingesetzt.

Die Nachvernetzung wird üblicherweise bei Temperaturen im Bereich von 100 - 250 °C, vorzugsweise 150 - 200 °C in einem Mischaggregat, beispielsweise in einem Naramischer vorgenommen. Sehr reaktive Nachvernetzer können auch bei niedrigeren Temperaturen von 20 bis 100°C eingesetzt werden. Häufig erfolgt die Nachvernetzung auch an in inerten Lösemitteln suspendierten Pfropfpolymerteilchen. Die Anwendung von verschiedenen Nachvernetzern bzw eine mehrfache Nachvernetzung ist möglich.

Entsprechend der anwendungsspezifischen Eigenschaften im Hygienebereich werden für die Synthese von vernetzten superabsorbierenden Polymeren monomerseitig überwiegend Säuregruppen tragende Monomere verwendet und in einer besonders bevorzugten Ausführungsform Acrylsäure und Methacrylsäure, wohingegen superabsorbierende Polymere in der Pflanzenaufzucht zusätzlich Acrylamid, Methacrylamid und sulfonatgruppenhaltige Monomerbestandteile aufweisen. Flockungs- und Dispergierhilfsmittel werden sowohl auf anionischer als auch auf kationischer Monomerbasis hergestellt, als Comonomer wird bevorzugt Acrylamid eingesetzt. Die im Bereich der Wasserenthärtung und der Wasch- und Reinigungsmittel eingesezten Polymerisate werden vorzugsweise überwiegend aus Carboxylatgruppen enthaltenden Monomeren aufgebaut, bewährt haben sich hier aber auch sulfonat- und alkoxylatgrppenhaltige Comonomere.

Darüber hinaus ist es oft vorteilhaft, wenn anorganische Perverbindungen zugesetzt werden, soweit sie nicht die Pfropfreaktion stören bzw. die Pfropfausbeute wesentlich vermindern. Insbesondere ermöglicht die Zugabe von anorganischen Peroxiden gegen Ende der Polymerisation eine nachhaltige Reduzierung der Restmonomergehalte, wodurch andere aufwendige Verfahren zu deren Abtrennung unterbleiben können. Besonders vorteilhaft werden diese Perverbindungen durch Zusatz von reduzierenden Verbindungen aktiviert. Natriumperoxodisulfat, Kaliumperoxodisulfat, Ammoniumperoxodisulfat, Peroxyborat sind Beispiele für erfindungsgemäß zu verwendende anorganische Perverbindungen.

Anstelle der zuvor erwähnten anorganischen Peroxide lassen sich auch Azoinitiatoren voteilhaft verwenden. Die folgenden Azoinitiatoren sind eine beispielhafte Aufzählung von erfindungsgemäß einsetzbaren Initiatoren 2,2'-Azobis(4-methoxy-2,4-dimethylvaleronitril), 2,2'-Azobis-((2-methyl-N-phenylpropionamidin)dihydrochlorid, 2,2'-Azobis-(2-methylpropionamidin)dihydrochlorid, 2,2'-Azobis-(2,4-dimethylvaleronitril), 2,2'-Azobis-(isobutyronitril), Dimethyl-2,2'-azobisisobutyrat.

Das erfindungsgemäße Verfahren wird in Wasser, org. Lösungsmitteln oder Wasser/Lösungsmittel-Gemischen durchgeführt. Als Lösemittelkomponenten kommen unter anderem Dimethylsulfoxid,Aceton,Dioxan,Methylpyrrolidon bzw deren Gemische in Frage Für den Fall, daß Wasser/Lösemittelgemische verwendet werden, richtet sich das Mischungsverhältnis von Wasser zu Lösemittel natürlich auch nach der Mischbarkeit der beiden Komponenten In einer bevorzugten Ausführungsform wird jedoch ein Wasseranteil von mehr als 50 Gew.% eingesetzt. Besonders bevorzugt ist eine rein wäßrige Fahrweise ohne org Lösemittel

Die Pfropfpolymerisation kann in normalen Polymerisationsreaktoren erfolgen, die mit entsprechenden Aggregaten zur Rührung, Dosierung fester, flüssiger und gasförmiger Soffe, zur Heizung und zur Kühlung ausgerüstet sind. Die Pfropfgrundlage wird im Reaktor zusammen mit dem Enzym vorgelegt und dann sofort oder im Laufe der Polymerisation mit den Monomerkomponenten versetzt. Oft ist es von Vorteil, erst einen kleinen Anteil der Monomeren mit vorzulegen und den Rest über eine längere Zeit zu dosieren. Für den Fall der Herstellung vernetzter Pfropfpolymerisate sind entsprechend andere Polymerisationsapparate, wie etwa Reaktionsmischer oder Polymerisationsbänder erforderlich. Die Temperaturen bei der enzymatischen Polymerisation sind nach oben durch die Temperaturstabilität des Enzyms und nach unten durch die Aktivität des Enzyms bzw.die Polymerisationsgeschwindigkeit begrenzt Bevorzugte Bereiche der Polymerisationstemperatur liegen zwischen 10 und 60°C und besonders bevorzugt zwischen 20 und 50°C. Die Polymerisationszeit kann je nach der Aktivität des Enzyms, der Phenolkomponente, der Monomere und der Pfropfpolymerisationstemperatur zwischen 1 h und 2 Tagen schwanken.

Während der Polymerisation kann eine Schutzgasatmospähre erforderlich sein, um radikalische Kettenabbrüche zu vermeiden.

Der pH-Wert während der erfindungsgemäßen Pfropfpolymerisation kann in einem Bereich von 3 bis 8, vorzugsweise von. 4 bis 5 schwanken. Der Zeitpunkt der Neutralisation der Monomerkomponenten richtet sich nach dem erforderlichen pH-Wert der Pfropfpolymerisationslösung und kann demnach vor, während oder nach der Polymerisation liegen bzw in Teilschritten kontinuierlich oder diskontinuierlich erfolgen. Als Neutralisationsmittel können anorganische und organische Basen und Säuren eingesetzt werden, beispielsweise Ammoniak, Ammoniumhydroxyd, Alkali-hydroxide, -carbonate und - hydrogencarbonate, Amine. Alkylamine, Alkanolamine, Hydroxylamin, Mineralsäuren, organische Sulfonsäuren.

Die Ansatzkonzentration während der Pfropfpolymerisation kann schwanken und hängt u.a. davon ab, ob hohe oder niedrige Molekulargewichte erzeugt werden sollen, ob hohe oder niedrige Monomeranteile vorliegen, ob vernetzte oder lösliche Pfropfpolymere hergestellt werden sollen oder ob Wasser, org. Lösemittel oder Mischungen von Wasser mit org. Lösemitteln als Reaktionsmedium eingesetzt werden Auf jeden Fall ist aber zu beachten, daß die Ansatzkonzentration möglichst so ausgelegt wird, daß die geforderte optimale Pfropfpolymersationstemperatur beibehalten werden kann

Aufgrund der phenolischen Bestandteile zeigen die Pfropfpolymerisate eine mehr oder weniger ausgeprägte Färbung, die gegebenenfalls durch oxidative oder reduktive Zusätze gemildert oder beseitigt werden kann. In diesem Zusammenhang haben sich u.a. Wasserstoffperoxid, Sulfitsalze oder phosphorige Säure für die Bleiche bewährt.

Nach Abschluß der Polymerisation werden die löslichen Polymerisate entweder direkt ihrer Anwendung zugeführt, oder aber bei speziellen Anforderungen durch Entfernung des Lösungsmittels (Sprühtrocknung/Verdampfung/Gefriertrocknung) oder durch Fällung als Pulver isoliert. Die Fällung kann durch Einstellung des pH-Wertes erfolgen und/oder durch Zugabe von Nichtlösemitteln. Für einige Anwendungen hat sich eine Dialyse zur Entfernung niedrigmolekularer Anteile bewährt. Dialysemembranen mit unterschiedlichen Ausschlußgrenzen sind käuflich erhältlich

Prinzipiell kann die Polymerisation auch in der Art einer Suspensionspolymerisation durchgeführt werden, wobei die wäßrige Reaktionsphase unter Zuhilfenahme von Suspensionsstabilisatoren in einer organischen Phase, die z. B. aus Cyclohexan bestehen kann, dispergiert wird und in Form dieser Suspension auspolymerisiert wird. Danach kann das Wasser azeotrop aus der Suspension abdestilliert und die festen Polymerisatteilchen können problemlos von der organischen Phase abfiltriert und nach Trocknung ihrer Verwendung zugeführt werden.

Vernetzte Pfropfpolymerisate werden nach oder bereits während der Polymerisation zerkleinert, gewölft, getrocknet und entsprechend ihrem Verwendungszweck auf eine bestimmte Teilchengröße gemahlen.

Die Molekulargewichtsmittel der Pfropfpolymere sind in weiten Grenzen beeinflußbar und bewegen sich zwischen 1000 und 10 Mio. Aufgrund anwendungstechnischer Erfordernisse sind fur verschiedene Einsatzgebiete unterschiedliche Molekulargewichte erforderlich. So werden beispielsweise im Bereich der Flockungs- und Verdickungshilfsmittel sehr hochmolekulare Polymerisate eingesetzt, zur Wasserenthärtung, Dispergierung und Bohrspülung werden die erfindungsgemäß hergestellten Polymere mit vergleichsweise niedrigen Molekulargewichten eingesetzt. Wesentliche Steuerungsparameter für das Molekulargewicht sind einerseits die Molekulargewichte der Pfropfgrundlage und andererseits das Enzym/Monomer-Verhältnis.

Die erfindungsgemäß hergestellten Pfropfpolymerisate sind in vielen Anwendungsgebieten vorteilhaft einsetzbar. Insbesondere seien die Absorption von wäßrigen und organischen Flüssigkeiten, die gezielte Abgabe von zuvor aufgenommenen Substanzen (controlled release), die Flockung, die Wasserenthärtung, die Dispergierung, die Verdickung und die Agglomerierung genannt.

Für die Absorption von wäßrigen und organischen Flüssigkeiten kommen vor allem vernetzte Polymerisate infrage, die bei der Aufnahme der Flüssigkeiten quellen und die aufgenommene Flüssigkeit speichern. Durch die Art der zu pfropfenden Monomere und durch die Auswahl und Menge der Vernetzer, sowie gegebenenfalls einer Nachvernetzung kann das Absorptionsverhalten der Polymerisate gesteuert werden, insbesondere auch das Absorptionsverhalten unter Belastung, das für den Einsatz der Produkte in Windeln von Bedeutung ist. Durch die Verwendung teilneutralisierter, saurer Monomere entstehen hydrophile, Wasser und wäßrige Flüssigkeiten, insbesondere Blut und Urin absorbierende Polymerisate, die für die Anwendung im Hygienesektor (Windeln, Inkontinenzprodukte) besonders geeignet sind, da sie im Gegensatz zu den rein synthetischen Absorbern biologisch abbaubar sind. Weiterhin werden die hydrophilen Absorber für die Lebensmittelverpackung und Wasserdichtmachung von Kabeln eingesetzt. Die Einarbeitung in absorbierende Flächengebilde ist möglich, besonders bevorzugt werden zum Aufbau dieser Flächengebilde synthetische und/oder natürliche Fasern in Form von Geweben oder Vliesen benutzt, in die die erfindungsgemäßen Absorber inkorporiert werden. Im Agrarbereich werden die erfindungsgemäßen Absorber als Wasserspeicher im Wurzelbereich der Pflanzen wirksam

Die absorbierenden Polymere können auch, nachdem man ihnen zuvor Wirkstoffe zugesetzt hat, diese über einen längeren Zeitraum verzögert abgeben. Beispielsweise seien Zusätze von Insektenbekämpfungsmitteln oder Düngemitteln genannt, die eine länger andauernde, nachhaltige Bekämpfung der Insekten erlaubt bzw die eine selbständige Nähstoffversorgung der Pflanzen über einen längeren Zeitraum ermöglicht. Besonders vorteilhaft ist auch bei diesen Anwendungen, daß die erfindungsgemäßen Absorber am Ende nach ihrer Nutzung einem biologischen Abbau unterliegen

Im Bereich der Flockungsmittel werden die. Polymerisate in ihrer löslichen Form eingesetzt, wobei insbesondere hohe Molekulargewichte von über 1 Million bevorzugt sind. Typische Flockungsprozesse werden beispielsweise an kommunalen Abwässern, an industriellen Abwässern, in chemisch/technischen Verfahren, beispielsweise etwa bei der Rotschlammflockung oder der Papierherstellung und bei der Trinkwasseraufbereitung durchgeführt. Je nach der zu lösenden Flockungsaufgabe mussen die erfindungsgemäßen Polymere durch die Auswahl der zu polymerisierenden Monomerkomponenten einen anionischen, kationischen oder amphoteren Charakter haben. Die Polymere werden als Flockungsmittel, je nach Flockungsprozeß, in Konzentrationen von 0.1 bis 5000 ppm, bevorzugt 0,1 bis 1500 und besonders bevorzugt von 0,1 bis 500 ppm eingesetzt.

Im Zuge der Verwendung der Polymere als Inkrustationsinhibitoren in Wasch- und Reinigungsmitteln kommen einerseits ihre guten Komplexiereigenschaften für mehrwertige Ionen, wie beispielsweise Calcium, Eisen und Magnesium und andererseits ihr gutes Dispergiervermögen zur Geltung. Letzteres hält Schmutzstoffe und ausgefallenen Hartwasserkomponenten während des Waschprozesses in der Schwebe. Diese Eigenschaften ermöglichen auch die vorteilhafte Verwendung der Polymerisate in der Faser- und Textilbehandlung, insbesondere in Bleich- und Färbebädern sowie beim Aufbereiten der Rohfasern und dem Entschlichten, wo es ebenfalls um die Komplexierung von Schwermetallen und um die Dispergierung von Hartwasserbestandteilen, Begleitstoffen von Rohfasern und überschüssigen Farbpigmenten geht. In Wasserkreisläufen werden die Polymerisate zur Verhinderung von Hartwasserausfällungen verwendet. Wasch- und Reinigungsmittel enthalten üblicherweise 0,1 bis 20 Gew.%, bevorzugt 0,5 bis 12 Gew.% der erfindungsgemäßen Polymere. Zur Wasserenthärtung werden Polymerkonzentrationen von 0,2 bis 5000 ppm, bevorzugt 1 bis 2000 ppm angewandt. In der Textilbehandlung werden 0,1 bis 10, vorzugsweise 0,1 bis 5 g Polymer pro Liter Flotte zugesetzt.

Die guten Dispergiereigenschaften der Polymerisate werden auch zur Herstellung und Stabilisierung von Dispersionen organischer Farbpigmente und anorganischer Pigmente (z.B. Titandioxid, Calciumcarbonat, Talkum) verwendet sowie zur Dispergierung von bei Bohrungen anfallenden Bohrschlämmen. Die Dispergierung organischer Farbpigmente und anorganischer Pigmente erfordert für gewöhnlich 1 bis 20 Gew.% Polymer bezogen auf Pigment, wobei sich das Verhältnis von Polymer zu organischem Farbpigment in einigen Extremfällen auch auf 1:1 belaufen kann.

Die für die Anwendungen Wasserenthärtung und Dispergierung bevorzugten Molekulargewichte der Polymere liegen im Bereich unter 100 000, vorzugsweise unter 50 000 und ganz besonders bevorzugt unter 25 000.

Werden die Polymerisate als Verdicker für Wasser und wäßrige Zubereitungen eingesetzt, etwa in Druckfarben, Papierstreichmassen, Anstrichdispersionen oder in der tert. Erölförderung, so sind hochmolekulare Polymere bevorzugt, d.h die Molekulargewiche sollten vorzugsweise über 1 Million liegen, damit eine gute Verdickungsleistung eintritt. Im Pigmentdruck werden beispielsweise bis zu 10 g Polymer pro Liter Druckpaste eingesetzt und in der Erdölförderung bis zu 1000 ppm.

Die erfindungsgemäß hergestellten Polymere sind auch als Binde- bzw. Agglomeriermittel geeignet. Beispielsweise sei die Agglomerierung von Filterstäuben, Ruß, Feinkohle, Ballastkohle und anderen Stäuben und Pulvern genannt sowie das Abbinden von Holzwerkstoffen und Kernsanden (Gießerei).

Die biologische Abbaubarkeit der erfindungsgemäß hergestellten Pfropfpolymerisate ist überraschend, da nach den Erkenntnissen des bisherigen Standes der Technik sowohl die synthetischen Pfropfäste als auch die phenolischen Pfropfgrundlagen, insbesondere das Lignin, als nicht abbaubar eingestuft wurden. Die Abbaubarkeit der Pfropfpolymerisate wurde durch die Einwirkung von Weißfäule hervorrufenden Basidomyceten untersucht und anhand der Verringerung des Molekulargewichtes nachgewiesen.

Mit den folgenden Beispielen wird die Herstellung und Anwendung der Polymerisate näher erläutert.

Liste der benutzten Abkürzungen für Monomere und Initiatoren.

| | |
|---|---|
| AMPS | Acrylamidomethylpropansulfonsäure |
| t-BHP | tert.-Butylhydroperoxid |
| DIMAPA | Dimethylaminopropylacrylamid |
| MAS | Natriummethallylsulfonat |
| MBAA | Methylenbisacrylamid |
| TMPTA | Trimethylolpropandiacrylat |

**Beispiele und Vergleichsbeispiele**

In den folgenden Versuchen wird Laccase beispielhaft für die Gruppe der erfindungsgemäß zu verwendenden oxidierenden Enzyme eingesetzt. Es handelt sich um ein Enzym der Firma Novo, Dänemark. Die Enzymaktivität beträgt etwa 190U/mL. Als Enzymeinheit U ist diejenige Enzymmenge definiert, die pro Minute 1 mMol Substrat umsetzt.

**Allgemeine Versuchsbeschreibung Beispiele 1 - 13**

Lignin- und Monomerkomponenten wurden in 36 ml bidest. Wasser gelöst und die resultierende Mischung mit NaOH auf pH 4 eingestellt. Anschließend wurden 100 µl einer $(NH_4)_2Fe(SO_4)_2 \cdot 6\ H_2O$ enthaltenden Lösung (Mohr'sches-Salz) und Laccase hinzupipettiert und die Reaktion durch Zugabe von t-Butylhydroperoxid (t-BHP) gestartet. Die Reaktionsmischung wurde 48h im Wasserbad bei 35°C aufbewahrt, wobei die Viskosität der Lösung erheblich zunahm Um nicht umgesetztes Monomer aus der Mischung zu entfernen, wurde 24 h gegen bidest Wasser dialysiert (Dialyseschlauch Serva, cut-off 12-14000), die erhaltene Lösung am Rotationsverdampfer eingeengt und gefriergetrocknet

Die Molekulargewichte wurden durch Gelpermeationschromatographie ermittelt. Als Molekulargewichtsstandards wurden Pullulanstandards eingesetzt. Aus den Chromatogrammen wurden die folgenden Molekulargewichtsmittel erhalten: Mn: Zahlenmittel, Mw: Gewichtsmittel, Mp: Molekulargewicht am Peak der Elutionskurve.

**Bsp.1**  3.43 ml Acrylsäure
480 mg Indulin-Sn (hemicellulosefreies, wasserlösliches sulfoniertes Lignin, Fa. Westvaco Chem., USA)
0 4 g MAS
80 µl t-BHP
200 µl Laccase
2 8 mg $(NH_4)_2Fe(SO_4)_2$ 6 $H_2O$        Ausbeute: 2.68 g (=59.8%)
Molekulargewichte: Mp=17 000, Mw=24 500

**Bsp.2**  3.04 ml Acrylsäure
800 mg Indulin-Sn
0.4 g AMPS
160 µl t-BHP
200 µl Laccase
2.8 mg $(NH_4)_2Fe(SO_4)_2 \cdot 6\ H_2O$        Ausbeute. 2.77 g (=63.0%)
Molekulargewichte: Mp=16 500, Mw=43 500

**Bsp.3**  3.04 ml Acrylsäure
800 mg Indulin-Sn

0.4 g AMPS
80 µl t-BHP
200 µl Laccase
2.8 mg $(NH_4)_2Fe(SO_4)_2\cdot 6\ H_2O$     Ausbeute: 2.9774 g (=67.7%)
Molekulargewichte: Mp=45 000, Mw=80 000

**Bsp.4**   3.43 ml Acrylsäure
480 mg Indulin-Sn
0.4 g MAS
80 µl t-BHP
200 µl Laccase
2.8 mg $(NH_4)_2Fe(SO_4)_2\cdot 6\ H_2O$     Ausbeute. 3.5496 g (=79.2%)
Molekulargewichte: Mp=31 000, Mw=36 000

**Vergleichsbeispiel**

Das Vergleichsbeispiel ist mit dem Beispiel 4 der DE 43 31 878 A1 identisch. Dort wurden mit dem Initiatorsystem Laccase/Sauerstoff aus 0,4 g Organosolvlignin und 3,2 g Acrylamid insgesamt 937 mg Polymerisat erhalten. Die Ausbeute in diesem Vergleichbeispiel betrug demnach 26%.

**Bsp.5**       4.0 ml Acrylsäure
400 mg Wafex SR (Sulfonatlignin mit ca. 8-12% reduz. Anteilen, Fa. Lignotech, Schweden)
23.1 mg MBAA (0.5 %)
80 µl t-BHP
180 µl Laccase
2.8 mg $(NH_4)_2Fe(SO_4)_2\cdot 6\ H_2O$       gelartiges Produkt

**Bsp.6**       wie **Bsp.5**, aber mit :
32.0 mg MBAA (0.8 %)       gelartiges Produkt

**Bsp.7**       4.0 ml Acrylsäure
400 mg Wafex SR
12 mg MBAA (0.3 %)
80 µl t-BHP
180 µl Laccase
2.8 mg $(NH_4)_2Fe(SO_4)_2\cdot 6\ H_2O$       (fast) gelartiges Produkt

**Bsp.8**       3.2 g Acrylamid
0.76 ml Acrylsäure
400 mg Wafex (Sulfonatlignin mit ca. 25% reduz. Anteilen, Fa. Lignotech, Schweden)
23.1 mg MBAA (0.5 %)
80 µl t-BHP
180 µl Laccase
2.8 mg $(NH_4)_2Fe(SO_4)_2\cdot 6\ H_2O$       gelartiges Produkt

**Bsp.9**       4.0 ml Acrylsäure
400 mg Wafex
28 9 µl Triallylamin (0.5 Gew %/Monomer)
80 µl t-BHP
180 µl Laccase
2.8 mg $(NH_4)_2Fe(SO_4)_2\cdot 6\ H_2O$       fast gelartiges Produkt

**Bsp.10** wie **Bsp.9**,   aber mit :
23 l mg Trimethylolpropantriacrylat (TMPTA) (0 5 Gew %/Monomer) nicht gelartig

**Bsp.11**       wie **Bsp.9**, aber mit :
32.0 mg TMPTA (0.8 Gew.%/Monomer)       nicht gelartiges Produkt

| **Bsp.12** | 8.0 ml Acrylsäure | |
| | 800 mg Wafex | |
| | 57.8 $\mu$l Triallylamin (0.5 Gew %/Monomer) | |
| | 160 $\mu$l t-BHP | |
| | 360 $\mu$l Laccase | |
| | 5.6 mg $(NH_4)_2Fe(SO_4)_2 \cdot 6\ H_2O$ | nicht gelartiges produkt |
| **Bsp.13** | 4.0 ml Acrylsäure | |
| | 800 mg Wafex | |
| | 23.1 mg MBAA (0.5 %) | |
| | 80 $\mu$l t-BHP | |
| | 180 $\mu$l Laccase | |
| | 2,8 mg $(NH_4)_2Fe(SO_4)_2 \cdot 6\ H_2O$ | gelartiges Produkt |

**Beispiel 14**

2,2 g Sulfonatlignin, 22 ml Acrylsäure und 230 mg Methylenbisacrylamid (MBAA) wurden in 200 ml bidest. Wasser gelöst und mit Natronlauge auf pH 4 eingestellt. Anschließend wurden 15 mg $(NH_4)_2Fe(SO_4)_2 \cdot 6\ H_2O$ (Mohr'sches-Salz) gelöst in 1 ml bidest. Wasser, sowie 1 ml Laccase hinzupipettiert und die Reaktion durch Zugabe von 400 $\mu$l t-Butylhydroperoxid gestartet. Die Reaktionsmischung wurde 48 h im wasserbad bei 35°C aufbewahrt, nach einer reaktionszeit von 2 Tagen wurde das Polymerisat im Trockenschrank bei 80°C getrocknet.

**Beispiel 15**

Die Herstellung erfolgt analog **Bsp.14**, allerdings mit 185 mg MBAA.

**Beispiel 16**

Die Herstellung erfolgt analog **Bsp.14**, allerdings ohne MBAA und mit
2,2 g AMPS und 19,8 g Acrylamid
Molekulargewichte Mw=336 000, Mn=68 000

**Beispiel 17**

Die Herstellung erfolgt analog **Bsp.16**, jedoch mit halber Initiatorkonzentration Molekulargewichte Mw=386 000, Mn=96 160

**Beispiel 18**

Die Herstellung erfolgt analog **Bsp.16**, jedoch werden 2,2 g MAS anstelle von AMPS eingesetzt. Molekulargewichte Mw=63 000, Mn=25 290

**Beispiel 19**

In diesem Falle wurde wasserunlösliches Sulfatlignin (Indulin) ohne nachträgliche Sulfonierung verwendet. Um die Zugänglichkeit des Ligninmoleküls zu erhöhen, wurde es zunächst in 140 ml 0,01 N Natronlauge gelöst und 16,6 g Acrylamid, 11,4 ml Trimethacryloylamidopropylammoniumchlorid (60%ige Lösung) sowie 1 ml Tween 80 hinzugefügt. Anschließend wurde der pH-Wert durch langsamens Titrieren mit 0,1 N Salzsäure auf einen Wert von 5 eingestellt. Dabei bildet das Lignin eine voluminöse Suspension. Zu dieser Reaktionsmischung wurden unter leichtem Rühren 15 mg $(NH_4)_2Fe(SO_4)_2 \cdot 6\ H_2O$ (Mohr'sches-Salz) gelöst in 1 ml bidest. Wasser, sowie 1 ml Laccase (6000 u/ml) hinzupipettiert und die Reaktion durch Zugabe von 400 $\mu$l t-Butylhydroperoxid gestartet. Die Reaktionsmischung wurd 48 h im Wasserbad bei 35°C aufbewahrt und dann bei 80°C getrocknet. Molekulargewichte: Mw=890 000, Mn=309 140

**Beispiele 20 - 21**

Die in der folgenden Tabelle genannten Phenole wurden in wenig Natronlauge gelöst und 1 g Acrylamid in 7 ml Wasser hinzugefügt. Der pH-Wert wurde mit 10%iger Schwefelsäure auf 4,5 eingestellt. Anschließend wurden 20

μl t-Butylhydroperoxid und 50 μl Laccase (Novo) hinzupipettiert. Nach einer Reaktionszeit im Wasserbad von 2 Tagen wurde die erhaltene Lösung in einem Dialyseschlauch mit einem cut-off von 1000 g/mol gegen Wasser dialysiert, um den Restmonomeranteil zu entfernen. Das Retentat wurde anschließend gefriergetrocknet und die Ausbeute bestimmt:

| Bsp. Nr. | Lignin | Ausbeute [g] | Ausbeute [Gew. %] |
|---|---|---|---|
| 20 | 160 mg Sulfonatlignin plus 100 mg $Ca(NO_3)_2$ | 0,996 | 85,9 |
| 21 | 160 mg Sulfonatlignin plus 16 mg Natriumperoxodisulfat | 0,896 | 77,2 |

**Beispiel 22**

Sulfonatlignin wurde in 8 ml 0,84 m Natronlauge gelöst und 1 ml Acrylsäure hinzugefügt, so daß sich ein pH-Wert von 4.1 einstellte Anschließend wurde 20 μl t-Butylhydroperoxid und 50 μl Laccase (Novo) hinzupipettiert. Nach einer Reaktionszeit im Wasserbad von 2 Tagen wurde die erhaltene Lösung in einem Dialyseschlauch mit einem cut-off von 1000 g/mol gegen Wasser dialysiert, um den Restmonomeranteil zu entfernen. Das Retentat wurde anschließend gefriergetrocknet und die Ausbeute bestimmt:

| Bsp. Nr. | Lignin | Ausbeute [g] | Ausbeute [Gew. %] |
|---|---|---|---|
| 22 | Sulfonatlignin | 1,140 | 98 |

Die folgenden Beispiele sind außerhalb des umfangs der Ansprüche

**Bestimmung der Abbaubarkeit**

Die Abbaubarkeit der untersuchten Polymere wurde anhand der Verringerung des Molekulargewichts der synthetisierten Polymere untersucht. Es wurden unterschiedliche Pfropfpolymere auf Lignin/Acrylsäurebasis hergestellt und diese in Flüssigkulturen einer Inkubation mit Weißfäule hervorrufenden Basidomyceten unterworfen. Bei dem ausgesuchten Stamm handelte es sich um Pleurotus ostreatus.

Durchführung der Abbauuntersuchungen

Flüssigkulturen

Die Flüssigkulturen wurden zunächst in jeweils drei 500 ml Erlenmeyerkolben mit 100 ml Medium angezogen. Die Beimpfung erfolgte mit jeweils drei 1 cm$^2$-großen Malz-Agar-Stücken der Stammkultur, die Inkubationszeit betrug drei Wochen im dunklen Kulturraum bei 23° C

Durchführung des Abbauversuches

Je Erlenmeyerkolben wurden 0.5 g Polymer in 100 ml des entsprechenden Mediums gelöst, wobei man jeweils drei Parallelen pro Polymerspezies verwendete. Nach Autoklavieren und Abkühlen wurde jeweils 1 ml der Polymerlösung für die Molmassenbestimmung durch HPLC (GPC) entnommen. Die drei Wochen alten Flüssigkulturen wurden mit Hilfe eines Turraxstabes homogenisiert und 1 ml der entstandenen Suspension zu den Polymerlösungen pipettiert. Die Inkubation erfolgte über einen Zeitraum von 48 Tagen im dunklen Kulturraum bei 23° C. Nach Ablauf der Inkubation wurde erneut 1 ml des Kulturmediums entnommen und die Molmasse des enthaltenen Polymers bestimmt.

Hochdruck-Flüssigkeitschromatographie

Zur Vorbereitung der HPLC wurden die Proben zentrifugiert, um unlösliche Mycelreste zu entfernen. Die Molekulargewichtsbestimmung erfolgte mittels einer größenausschlußchromatographischen Trennung (Size-Exclusion-Chromatographie, SEC) an einem TSK-Gelund HEMA BIO-Säulensatz und wurde mit einen Dioden-Array-Detektor angezeigt. Zur Bestimmung des Molekulargewichts und dessen Verteilung wurde eine Eichung mit Polyacrylsäurestandards (Mp von 855 bis 1 1000000, Na-Salz linear, (PPS, Mainz) erstellt.

Geräte:

Hochdruck-Flussigkeitschromatographie-System (Hewlett Packard, Palo Alto, Kalifornien, USA, 1090 L Liquid Chromatograph mit Pascal -Workstation und Dioden-Array-Detektor, DAD)

SEC-Säulen:     TSKgel 6000 PWxl, TSKgel 5000 PWxl (je 13 μm; 7.8*300 mm) (ToSoHaas, Stuttgart) und HEMA BIO 1000 (10 μm,8*300 mm)

(Polymer Standard Service PPS, Mainz)

SEC-Bedingungen:

Eluent:               0,15M NaCl-Lösung in hochgereinigtem Wasser (Water-Purification-System "Milli-Q", Millipor, Eschborn

Fluß:                 1 ml/min

Detektor:             Dioden-Array-Detektor DAD, Hewlett Packard, Palo Alto, Kalifornien, USA

Temperatur:           35°C

Eichstandards:        Polyacrylsäure-Mp von 855 bis 1 1000000, Na-Salz, linear (PPS, Mainz)

Injektionsvolumen:   20μl

Interner Standard:    Benzolsulfonsäure Na-Salz, 0,1 mg/ml Probe

Für Lignin-Acrylsäurepfropfpolymere ergaben sich durch den biologischen Abbau folgende Molekulargewichtsveränderungen:

| Ligninkomponente, Anteil im Pfropfpolymer | Molekulargewicht vor Inkubation | nach 48 Tagen | % Abnahme |
|---|---|---|---|
| Ligninsulfonat [5%] | 325 810 | 151 379 | 53.5 |
| Ligninsulfonat [10%] | 254 509 | 99 281 | 61.0 |
| Ligninsulfonat [20%] | 175 159 | 58 172 | 66.8 |
| Ligninsulfonat [30%] | 128 964 | 45 665 | 64.6 |

**Bestimmung der Retention**

Das Rückhaltevermögen der vernetzten Polymerisate für wäßrige Flüssigkeiten wird für eine 0,9 %ige Kochsalzlösung bestimmt. Der Test wird, nachdem die Polymerisate getrocknet, gemahlen und auf 180 bis 800 μm abgesiet sind, wie folgt durchgeführt:
Es werden 200 mg Prüfsubstanz in einem Teebeutel eingeschweißt und für 30 Minuten in einer 0,9%igen NaCl-Lösung eingetaucht, 10 Minuten abgetropft und in einer Schleuder (23 cm Durchmesser, 1400 UPM) 5 Minuten geschleudert und gewogen. Einen Teebeutel ohne wasserabsorbierendes Polymerisat läßt man als sogenannten Blindwert mitlaufen:

RETENTION = (Auswaage - Blindwert) / Einwaage Polymer (g/g)

| Beispiel | Retention [g 0,9 %ige NaCl-Lsg/g Polymer] |
|---|---|
| 14 | 35,4 |
| 15 | 43,2 |
| 5 | 63,6 |
| 6 | 54,7 |
| 8 | 30,1 |
| 10 | 47,4 |

**Calciumcarbonat-Dispergierfähigkeit**

Ein wesentliches Eigenschaftsmerkmal von Cobuildern in Wasch- und Reinigungsmitteln ist die Fähigkeit zur Verhinderung schwerlöslicher Niederschläge von Erdalkali- oder Schwermetallsalzen, die z. B. Inkrustationen auf Wäschestücken hervorrufen. Für die Bestimmung der Calciumcarbonat-Dispergierfähigkeit (CCDK) [nach Richter Winkler in Tenside Surfactants Detergents 24 (1987) S. 213 - 216] wurde wie folgt vorgegangen:

1 g Produkt (Trockensubstanz) wird in 100 ml Wasser dest. gelöst und mit 10 ml 10%iger Natriumcarbonat-Lösung versetzt. Mit Natronlauge wird ein pH-Wert von 11 eingestellt und mit 0,25 ml Calciumacetat-Lösung bis zum Auftreten einer ersten dauerhaften Trübung titriert. Die Angabe der CCDK erfolgt in mg $CaCO_3$/g Trockensubstanz

| Beispiel | CCDK [mg $CaCO_3$/g TS] |
|---|---|
| 1 | 143 |
| Handelsprodukt Acrylsäure/Malein säure-Copolymer | 256 |

**Calciumbindevermögen nach dem Hampshire-Test:**

Eine Lösung aus 1g Produkt (Trockensubstanz) in 100ml Wasser wird mit 2ml 10%iger Natriumcarbonatlösung versetzt und mit Natronlauge auf pH 11 eingestellt Man titriert mit 0,25mol Calciumacetatlösung bis zum Auftreten einer ersten dauerhaften Trübung Die Angabe erfolgt in mg $CaCO_3$/g Trockensubstanz

| Beispiel | Hampshire-Wert [mg $CaCO_3$/g TS] |
|---|---|
| **18** | 1328 |
| Maleinsäure/ Acrylsäure Copolymer | 590 |

Die erfindungsgemäßen Polymerisate zeigen ein ausgezeichnetes Calciumbindevermögen nach Hampshire, das deutlich über dem handelsublicher synthetischer Copolymerisate liegt, die als Cobuilder für Waschmittel eingesetzt werden.

**Hartwasserkochbeständigkeit:**

Dieser Test gibt ein Maß für die Fähigkeit des Polymers, eine Ausfällung von Hartwasserbestandteilen zu inhibieren.

Eine Calciumchloridlösung (33,6° dH reine Calciumhärte) wird mit einer bestimmten Menge an 10%iger Polymerisatlösung versetzt, 5 Minuten auf einer Heizplatte erhitzt und anschließend bezüglich Trübung beurteilt. Durch Variation der Polymermenge wird diejenige Konzentration ermittelt, bei der erstmals eine klare Lösung erhalten wird. Die Angabe erfolgt hierbei in Gramm Polymer pro Liter Hartwasser.

| Beispiel | Hartwasserbeständigkeit [g Polymer/l] |
|---|---|
| **1** | 2,0 |
| **2** | 1,0 |
| **16** | 0,5 |

(fortgesetzt)

| Beispiel | Hartwasserbeständigkeit [g Polymer/l] |
|---|---|
| Maleinsäure/ Acrylsäure- Copolymer | 2,0 |

Die Ergebnisse machen deutlich, daß mit den erfindungsgemäßen Polymerisaten eine wirksame Inhibierung von Kesselstein oder ähnlichen Ablagerungen erreicht bzw. Ausfällungen von

Bestandteilen des Hartwassers verhindert werden kann. Die Hartwasserbestandigkeit ist vergleichbar bzw. besser als kommerziell verfügbare Handelsprodukte auf Basis von Polyacrylaten

## Flockungswirkung

Die Flockungswirkung der erfindungsgemäßen Polymerisate wird an einer im Labor hergestellten Blautonsuspension gemessen. Diese Suspension besteht aus 18 g Blauton in 1 l Wasser und wird mit einem hochtourigen Rührer suspendiert und in einen 250 ml Prüfzylinder von 5 cm Durchmesser überführt. Dort wird mit einem langsamen Fingerrührer weitergerührt und mit 2,5 ml 20%iger Aluminiumsulfatlösung versetzt. 20 sec danach werden 2 oder 4 ppm Flockungsmittelpolymer zugesetzt und nach weiteren 5 sec wird der Rührer abgestellt. Als Flockungswert mißt man dann die Zeit des Absinkens der Oberfläche der geflockten Blautonsuspension zwischen zwei, 4 cm auseinanderliegenden Markierungen in der Mitte des des Zylinders.

| Beispiel | Flockungszeit [sec] 2 ppm Polymer | Flockungszeit [sec] 4 ppm Polymer |
|---|---|---|
| **19** | 42,8 | 33,4 |
| Handelsübliches Flockungs-Copolymerisat auf Basis Acrylamid/ DIMAPA-Quat. | 10 - 15 | |

## Patentansprüche

1. Verfahren zur enzymkatalysierten radikalischen Pfropfung von ethylenisch ungesättigten Monomeren auf Lignin mit radikalisch oxidierenden Enzymen, **dadurch gekennzeichnet, daß** die Pfropfung in einem Lösungsmittel, enthaltend mehr als 50 Gew.-% Wasser, Rest organisches Lösungsmittel, in Gegenwart von 0,01 bis 10 Gew.-% organischer Peroxide und/oder Hydroperoxide, die im Reaktionsmedium zumindest teilweise löslich sind, bei einem pH-Wert von 3 bis 8 durchgeführt wird.

2. Verfahren nach Anspruch 1, **dadurch gekennzeichnet, daß** die oxidierenden Enzyme aus der Gruppe Laccase, Lignin-Peroxidase und Mangan-Peroxidase ausgewählt sind.

3. Verfahren nach Anspruch 1und 2, **dadurch gekennzeichnet, daß** die Pfropfreaktion in Wasser oder Wasser/ Lösemittelgemischen als Reaktionsmedium durchgeführt wird.

4. Verfahren nach Anspruch 1-3, **dadurch gekennzeichnet, daß** die Pfropfreaktion bei pH-Werten von 4 bis 5 durchgeführt wird.

5. Verfahren nach Anspruch 1-4, **dadurch gekennzeichnet, daß** die Pfropfreaktion bei Temperaturen von 10 bis 60°C, vorzugsweise bei 20 bis 50°C durchgeführt wird.

6. Verfahren nach Anspruch 1-5, **dadurch gekennzeichnet, daß** die organischen Peroxide/Hydroperoxide im Reaktionsmedium zumindest teilweise löslich sind.

7. Verfahren nach Anspruch 1-6, **dadurch gekennzeichnet, daß** die Peroxide/Hydroperoxide aus der Gruppe t-Butylhydroperoxid, Mono- und Dihydroperoxide des Dioxans und Cumolhydroperoxid ausgewählt sind.

8. Verfahren nach Anspruch 1-7, **dadurch gekennzeichnet, daß** die Polymerisation in Gegenwart reduzierender Schwermetallsalze durchgeführt wird.

9. Verfahren nach Anspruch 1-8, **dadurch gekennzeichnet, daß** die Pfropfreaktion unter Verwendung anionischer, kationischer oder neutraler wasserlöslicher Monomere bzw. deren Mischungen durchgeführt wird.

10. Verfahren nach Anspruch 1-9, **dadurch gekennzeichnet, daß** die die anionische Monomerkomponente aus der Gruppe (Meth)acrylsäure, Maleinsäure(anhydrid), (Meth)acrylamidomethylpropansulfonsäure und (Meth)allylsulfonat, die kationische Monomerkomponente aus der Gruppe N,N-Dimethylaminopropyl(meth)acrylamid und N, N-Dimethylaminoethyl(meth)acrylat, wobei der Aminstickstoff gegebenenfalls quaterniert oder neutralisiert ist und die neutrale Monomerkomponente aus der Gruppe (Meth)acrylamid, (Meth)acrylnitril, Hydroxyethyl(meth)acrylat, N-Vinylpyrrolidon und Methoxypolyethylenglykol(meth)acrylat ausgewählt ist

11. Verfahren nach Anspruch 1-10, **dadurch gekennzeichnet, daß** die Pfropfreaktion unter Verwendung vernetzender Monomere durchgeführt wird.

12. Verfahren nach Anspruch 1-11, **dadurch gekennzeichnet, daß** der Gehalt der Ligninkomponente im Reaktionsgemisch 25 Gew.%, vorzugsweise 15 Gew.% und besonders bevorzugt 10 Gew.% nicht überschreitet.

13. Verfahren nach Anspruch 1-12, **dadurch gekennzeichnet, daß** das Pfropfpolymerisat aus der Reaktionslösung isoliert und gegebenenfalls zerkleinert, getrocknet, gemahlen und gesiebt wird.

## Claims

1. Method of radical grafting by enzymatic catalysis of monomers unsaturated with ethylene, on lignin, using radically oxidising enzymes,
**characterised in**
**that** grafting is carried out in a solvent containing more than 50 % by weight of water, with the balance being an organic solvent, in the presence of 0.01 to 10 % by weight of organic peroxides and/or hydro peroxides that are at least partly soluble in the reaction medium, at a pH level of 3 to 8.

2. Method according to Claim 1, **characterised in that** said oxidizing enzymes are selected from the group consisting of laccase, lignin peroxidase and manganese peroxidase.

3. Method according to the Claims 1 and 2, **characterised in that** the grafting reaction is carried out in water or in water/solvent mixtures as reaction medium.

4. Method according to the Claims 1 to 3, **characterised in that** the grafting reaction is carried out at pH levels of 4 to 5.

5. Method according to the Claims 1 to 4, **characterised in that** the grafting reaction is carried out at temperatures of 10 to 60 °C, preferably of 20 to 50 °C.

6. Method according to the Claims 1 to 5, **characterised in that** said organic peroxides/hydro peroxides are at least partly soluble in the reaction medium.

7. Method according to the Claims 1 to 6, **characterised in that** said peroxides/hydro peroxides are selected from the group consisting of 5-butyl hydro-peroxide, mono-and di-hydro peroxide of dioxan, and cumene hydro-peroxide.

8. Method according to the Claims 1 to 7, **characterised in that** polymerisation is carried out in the presence of reducing salts of heavy metals.

9. Method according to the Claims 1 to 8, **characterised in that** the grafting reaction is carried out with the application of anionic, cationic or neutral monomers soluble in water or their mixtures, respectively.

10. Method according to the Claims 1 to 9, **characterised in that** said anionic monomer component is selected from the group consisting of (meth)acrylic acid, maleic acid (anhydride), (meth)acryl-amido methyl-propane sulphonic acid and (meth)allyl sulphonate, that said cationic monomer component is selected from the group consisting of N,N-dimethyl amino propyl (meth)acryl amide and N,N-dimethyl amino ethyl (meth)acrylate, with the amine nitrogen being possibly quaternised or neutralised, and that said neutral monomer component is selected from the group consisting of (meth)acryl amide, (meth)acryl nitrile, hydroxyl ethyl (meth)acrylate, N-vinyl pyrrolidone and methoxy polyethylene glycol (meth)acrylate.

11. Method according to the Claims 1 to 10, **characterised in that** the grafting reaction is carried out with application of cross-linking monomers.

12. Method according to the Claims 1 to 11, **characterised in that** the level of the lignin component in the reaction mixture does not exceed 25 % by weight, preferably 15 % by weight, and particularly preferably 10 % by weight.

13. Method according to any of the Claims 1 to 12, **characterised in that** the graft polymer is isolated from the reaction solution and is possibly comminuted, dried, ground and screened.

## Revendications

1. Procédé de greffage radical par catalyse enzymatique des monomères non saturés en éthylène, sur la lignine, en utilisant des enzymes pour une oxydation radicale,
   **caractérisé en ce**
   **que** le greffage se fait dans un solvant contenant plus de 50 % par poids de l'eau, le reste étant un solvant organique, en présence de 0,01 à 10 % par poids des peroxydes organiques et/ou des hydro peroxydes, qui sont, au moins en partie, soluble dans le milieu réactionnel, à une valeur pH de 3 à 8.

2. Procédé selon la revendication 1, **caractérisé en ce que** lesdits enzymes oxydants sont choisis parmi le groupe composé de la laccase, la peroxydase de lignine, et de la peroxydase du manganèse.

3. Procédé selon les revendications 1 et 2, **caractérisé en ce que** la réaction de greffage est réalisée dans de l'eau ou dans des mélanges de l'eau/solvant en tant que milieu réactionnel.

4. Procédé selon les revendications 1 à 3, **caractérisé en ce que** la réaction de greffage est réalisée aux valeurs pH entre 4 et 5.

5. Procédé selon les revendications 1 à 4, **caractérisé en ce que** la réaction de greffage est réalisée aux températures de 10 à 60 °C, de préférence de 20 à 50 °C.

6. Procédé selon les revendications 1 à 5, **caractérisé en ce que** lesdits peroxydes/hydro peroxydes organiques sont, au moins en partie, soluble dans le milieu réactionnel.

7. Procédé selon les revendications 1 à 6, **caractérisé en ce que** lesdits peroxydes/hydro peroxydes organiques sont choisis du groupe constitué par le 5-butylehydro peroxyde, le mono- et di-hydro peroxyde de dioxan, et le hydro peroxyde de cumin.

8. Procédé selon les revendications 1 à 7, **caractérisé en ce que** la polymérisation se fait en présence des sels réduisant de métaux lourds.

9. Procédé selon les revendications 1 à 8, **caractérisé en ce que** la réaction de greffage est réalisée par l'emploi des monomères anioniques, cationiques ou neutres, solubles dans de l'eau, ou respectivement leurs mélanges.

10. Procédé selon les revendications 1 à 9, **caractérisé en ce que** ledit composant monomère anionique est choisi du groupe constitué par l'acide (méth)acrylique, (l'anhydre de) l'acide maléique, l'acide de méthyle propane (méth)acrylo-amide, **en ce que** ledit composant monomère cationique est choisi du groupe constitué par le (méth)acrylo-amide de N,N-diméthylaminopropyle-(méth)acrylo-amide et le (méth)acrylate de N,N-diméthylamino-éthyle, l'azote de l'amine étant éventuellement quaternisé ou neutralisé, et **en ce que** ledit composant monomère neutre est choisi du groupe constitué par l'amide (méth)acrylique, le nitrile (méth)acrylique, le (méth)acrylate de hydroxyle éthyle, le pyrrolidone de N-vinyle et le (méth)acrylate de méthoxypolyéthylène-glycol

11. Procédé selon les revendications 1 à 10, **caractérisé en ce que** la réaction de greffage est réalisée par l'emploi des monomères réticulant.

12. Procédé selon les revendications 1 à 11, **caractérisé en ce que** le niveau du composant de lignine dans le mélange réactionnel ne dépasse pas 25 % par poids, de préférence 15 % par poids, et plus préférablement 10 % par poids.

13. Procédé selon une quelconque des revendications 1 à 12, **caractérisé en ce que** le polymère greffé est isolé de la solution du mélange réactionnel et est éventuellement pulvérisé, trituré et tamisé.